# EUROPÄISCHE PATENTSCHRIFT

(11) **EP 1 176 684 B1**
(45) Veröffentlichungstag und Bekanntmachung des Hinweises auf die Patenterteilung: **20.10.2010**
(21) Anmeldenummer: 01117925.6
(22) Anmeldetag: 24.07.2001
(51) Int. Cl.: H02G 3/08

(54) **Multimedia-Anschlussdose**
Multimedia connection box
Boîte de connexion multi-média

(30) Priorität: 28.07.2000 CH 14982000
(43) Veröffentlichungstag der Anmeldung: 30.01.2002
(73) Patentinhaber: Reichle & De-Massari AG, 8620 Wetzikon (CH)
(72) Erfinder: Reichle, Hans, 8620 Wetzikon (CH)
(74) Vertreter: Alder, Hans Rudi

(56) Entgegenhaltungen:
- DE-A- 3 802 152
- DE-C- 4 234 451
- US-A- 5 243 134

## Beschreibung

Die vorliegende Erfindung betrifft eine Anschlussdose gemäss Oberbegriff des Anspruchs 1, sowie ein Schirmanschlusselement gemäß Anspruch 9 und ein Kommunikationsmodul gemäß Anspruch 13 zur Verwendung mit dieser Anschlussdose und die Verwendung eines Kommunikationsmoduls mit dieser Anschlussdose.

Derartige Anschlussdosen sind aus der Telekommunikationsund Datenübertragungstechnik (Siehe DE-C1-4234451) bekannt, dienen allen Formen der Datenkommunikation wie Video-, Audio-, Computer- und Telefonübertragung und werden unter anderem als Aufputz-oder Unterputzdosen im Gebäudebau verwendet. An diese Anschlussdosen können sowohl Analoggeräte als auch ISDN-Geräte, beispielsweise für Telefon, Fax, Modem, Personalcomputer usw., an einen S-BUS angeschlossen werden, welcher an seinem einen Ende (customer side) mit einem Abschlusswiderstand von beispielsweise 100 Ohm abgeschlossen ist und an seinem anderen Ende (provider side) an ein Netzabschlussgerät (NT+2ab) angeschlossen ist. Dieses Netzabschlussgerät ist wiederum über einen Schaltkasten respektive Amtsverteiler mit der Ortszentrale verbunden. Diese bekannten Anschlussdosen für die Telekommunikation respektive Datenübertragung weisen beispielsweise 4-Pol-Steckereinsätze, A6-Einsätze (6-polig), RJ45-Einsätze (8-polig) oder RJ11-Einsätze (4- oder 6-polig) auf. Diese Steck- und Anschlussdosen können in einer Unterputzausführung ausgestaltet sein und einer Grundplatte mit einem oder zwei Einsätzen, einer Befestigungsplatte sowie eine Abdeckung umfassen. Für die Unterputzausführung wird vorzugsweise ein Unterputz-Einlasskasten vorgesehen, welcher üblicherweise einen im wesentlichen runden Querschnitt mit einem Innendurchmesser von ca. 58 mm oder einen im wesentlichen rechteckigen Querschnitt mit Seitenlängen von ca. 58 mm x 58 mm aufweist. Die Steck- und Anschlussdose kann auch in einer Aufputzausführung ausgestaltet sein und umfasst, je nach Verwendung, eine Abdeckkappe oder einen Abdeckrahmen mit einer Frontplatte.

Anschlussdosen sind auch aus der Fernseh- und Radiotechnik, d.h. HF-Technik, und insbesondere aus den Installationen von Koaxialkabelnetzen bekannt. So weisen beispielsweise Koaxial-Antennen-Steckdosen je einen abgeschirmten Kabelanschluss für ein Fernsehgerät und einen Radioempfänger (IEC-Buchse und IEC-Stecker) auf. Eine derartige Anschlussdose ist beispielsweise aus der DE 198 35 631 bekannt. In einer Weiterbildung solcher Anschlussdosen werden diese mit zusätzlichen Anschlüssen für eine rückwegtaugliche Datenkommunikation, insbesondere einen Internet-Anschluss und/oder einer Telefon-Steckbuchse, ausgerüstet.

Derartige Multimedia-Anschlussdosen finden ihre Verwendung vorzugsweise im Heim- und Small-Office-Bereich, u.a. in Wohnungen und Häusern, Verwaltungsgebäuden, Spitälern und Gastronomie-Betrieben. Dort werden elektronische Geräte wie Telefon, Anrufbeantworter, Fernsehgeräte, Videorecorder sowie Fax, Computer und Internetgeräte zunehmend verwendet. Eine weitere Entwicklung zeichnet sich in der Verwendung von ferngesteuerten Haushaltgeräten, Home Security-Vorrichtungen, Beleuchtungskörper usw. ab. Die Verkabelung und Vernetzung all dieser Geräte und Installationen macht einen erheblichen Aufwand erforderlich, weil für jeden dieser Dienste respektive Anwendungen separate Dosen installiert werden müssen.

Es besteht das Bedürfnis, insbesondere in Neubauten Verkabelungsmöglichkeiten zu schaffen, welche eine hohe Flexibilität und grosse Benutzerfreundlichkeit kostengünstig ermöglichen. Auch für bestehende Bauten und Umbauten besteht das Bedürfnis nach einer kostengünstigen und effizienten Erweiterung der vorhandenen Installationen.

Anschlussdosen, welche diesen Bedürfnissen zum Teil nachkommen, sind dem Fachmann bereits bekannt. Diese Anschlussdosen weisen einen metallischen Dosenkörper respektive ein Montageelement auf, in dessen Bodenteil die für die Signalübertragung erforderliche elektrische Schaltung liegt. Auf diesem Bodenteil sind Buchsen für die geschirmten und ungeschirmten Steckverbindungen, sowie Anschlussklemmen für die Befestigung der anzuschliessenden Koaxialkabel angebracht. Bei diesen Multimedia-Anschlussdosen wird für die geschirmten Koaxialverbindungen der Grossteil der Bodenfläche respektive Querschnittsfläche der Anschlussdose beansprucht, weshalb für die zusätzlichen Anschlusselemente für die Kommunikationstechnik der Raum oberhalb des mit diesen Koaxialverbindungen bestückten Bodenraums verwendet werden muss. Dies führt zu einem unerwünscht hohen Aufbau für die Anordnung der Steckverbindungen und deshalb zu einer unerwünscht grossen Einbautiefe für die gesamte Anschlussdose.

Es ist Aufgabe der vorliegenden Erfindung, eine Anschlussdose zu schaffen, bei welcher die Einbautiefe respektive Bauhöhe der Dose minimiert ist und mit welcher eine Vielzahl von Anschlussvarianten in modularer Weise, d.h. ohne grossen Installationsaufwand ermöglicht werden kann.

Es ist eine weitere Aufgabe der vorliegenden Erfindung, eine Anschlussdose zu schaffen, welche, gegenüber den heute bekannten Anschlussdosen, eine verbesserte HF-Dichtigkeit aufweist, d.h. rundum zuverlässig absgechirmt ist.

Es ist insbesondere Aufgabe der vorliegenden Erfindung, die mechanische und elektrische Schnittstelle für den Anschluss der Telekommunikations- und Datenübertragungskabel in einer Weise auszugestalten, sodass eine Anpassung an die Bedürfnisse des Anwenders in einfachster Weise möglich ist. Vorzugsweise soll auch beim Installieren der zulässige Biegeradius der verwendeten Kabel nicht unterschritten werden.

Bevorzugte Weiterbildungen der erfindungsgemässen Anschlussdose weisen die Merkmale der Unteransprüche 2 bis 8 auf.

Es ist darüber hinaus Aufgabe der vorliegenden Erfindung, geschirmte und ungeschirmte Anschlusselemente für die Verwendung mit dieser Anschlussdose zu schaffen, welche mit dieser Anschlussdose mechanisch und elektrisch einwandfrei zusammenwirken.

Wesentliche Aufgabe der vorliegenden Erfindung ist es, eine Anschlussdose zu schaffen, welche es erlaubt, Kommunikationsmodule bekannter Art in einfachster Weise und in Kombination mit dieser Dose zu verwenden.

Diese Aufgabe wird erfindungsgemäss durch eine Anschlussdose mit den Merkmalen des Anspruchs 1 gelöst und insbesondere durch eine Anschlussdose, welche ein geschlossenes metallisches Gehäuse umfasst, in welchem mindestens eine Koaxial-Anschlussbuchse integriert ist, welches metallische Gehäuse eine Grundfläche aufweist, die maximal die Hälfte der Querschnittsfläche der Anschlussdose beansprucht und welches metallische Gehäuse mit einem ersten Adapterteil für die Befestigung mindestens eines Kommunikationsmoduls versehen ist. Die Querschnittsfläche der Anschlussdose wird im wesentlichen durch den vom Einlasskasten zur Verfügung gestellten Raum begrenzt. Im Normalfall wird diese Querschnittsfläche derjenigen einer Normeinbaudose entsprechen. Es versteht sich also, dass im folgenden mit der Querschnittsfläche der Anschlussdose nicht der Querschnitt des durch die verwendeten Module beanspruchten Raums verstanden wird, sondern die Querschnittsfläche des für derartige Module nutzbaren Raums gemeint ist.

Die Einsatzmodule für die Kommunikationstechnik bzw. die Kommunikationsmodule sind neben dem metallischen Gehäuse und, im wesentlichen auf gleicher Ebene angeordnet.

In einer besonderen Ausführungsform der erfindungsgemässen Anschlussdose ist das metallische Gehäuse für die Herstellung einer mechanischen und elektrischen Schnittstelle mit mindestens einer Anschlussstelle für die tangentiale Aufnahme eines Schirmanschlusselementes versehen.

Die Vorteile der erfindungsgemässen Multimedia-Anschlussdose sind dem Fachmann unmittelbar ersichtlich. Insbesondere können diese Dosen dank ihrer grossen Modularität einfach, schnell und kostengünstig installiert werden und erlauben es, eine Vielzahl von beliebig wählbaren Anordnungen ohne grossen Aufwand herzustellen, sodass die erfindungsgemässe Multimedia-Anschlussdose sehr installationsfreundlich bzw. benutzerfreundlich ist. Es versteht sich, dass wegen der grossen Modularität eine Erweiterung der Anwendungsmöglichkeiten ohne grossen Aufwand zu erzielen ist. Darüber hinaus wird mit dieser Dose der Ausbau bestehender Installationen vereinfacht und eine optimale Anpassung an die Kundenbedürfnisse ermöglicht.

Ein weiterer Vorteil der erfindungsgemässen Anschlussdose ist darin zu sehen, dass die geschirmten Anschlusskabel, respektive Koaxial-Anschlusskabel, tangential mit der Dose verbunden werden können, wobei gemeint ist, dass die Anschlusskabel in einer im wesentlichen tangential zur Umfangsrichtung der Dose verlaufenden Richtung zuführbar sind, sodass diese Kabel der Dose unter einem grösstmöglichen Biegeradius zuführbar sind.

Darüber hinaus führt die erfindungsgemässe Anordnung zu Anschlussdosen mit geringer Einbautiefe, was gebäudetechnisch erwünscht ist, um beispielsweise Schall- und Wärmebrücken zu vermeiden.

Im folgenden soll die vorliegende Erfindung anhand von Ausführungsbeispielen und mit Hilfe der Figuren näher erläutert werden. Es zeigen:
- Fig. 1: eine aus dem Stand der Technik bekannte Multimedia-Anschlussdose für Koaxialkabel;
- Fig. 2: eine erfindungsgemässe Multimedia-Anschlussdose;
- Fig. 3: eine Multimedia-Anschlussdose gemäss Fig. 2 mit montierter Abdeckplatte;
- Fig. 4: eine Multimedia-Anschlussdose gemäss Fig. 2, in Explosionsdarstellung, ohne Kommunikationsmodul;
- Fig. 5: eine Steckverbindung für den Anschluss eines Koaxialkabels an einen A-Kontakt einer erfindungsgemässen Multimedia-Anschlussdose;
- Fig. 6: ein weiteres Ausführungsbeispiel eines Schirmanschlusselementes;
- Fig. 7: das Schirmanschlusselement gemäss Fig. 6 verbunden mit einem Federkontakt;
- Fig. 8: ein weiteres Ausführungsbeispiel einer erfindungsgemässen Anschlussdose;
- Fig. 9: ein Detail der Anschlussdose gemäss Fig. 8;
- Fig. 10: die Anschlussdose gemäss Fig. 8 zusammen mit einem Unterputz-Einlasskasten.

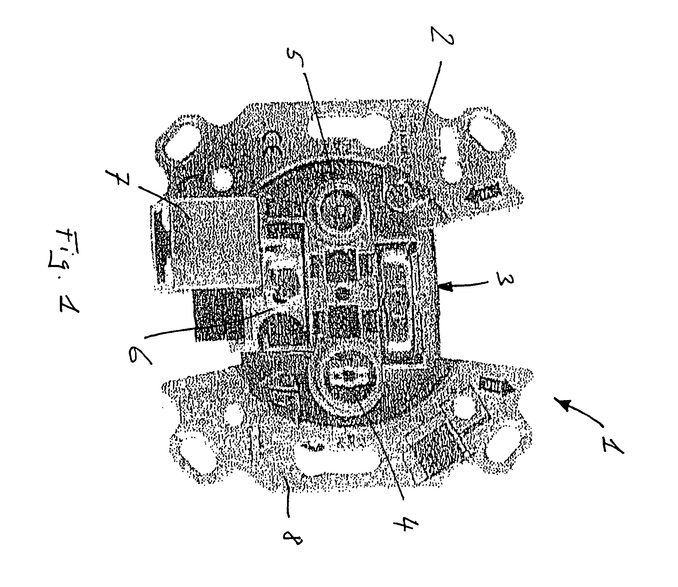

Figur 1 zeigt eine Multimedia-Anschlussdose 1 bekannter Art. Diese besteht im wesentlichen aus einem metallischen Montageelement 2 mit einem Befestigungskragen 8 und einem Bodenteil 3. In diesem Bodenteil 3 ist die Anschlusselektronik respektive die elektrische Schaltung für den Anschluss untergebracht. Auf diesem Bodenteil 3 sind Koaxialanschlussbuchsen 4, 5 angebracht. Zwischen den Anschlussbuchsen ist eine Anschlussklemme 6 vorgesehen, an welche die benötigten Koaxialkabel angeschlossen werden. Bei der dargestellten Anschlussdose ist zusätzlich eine Buchse 7 für die Übertragung von Kommunikationssignalen aufgesetzt. Diese Buchse 7 ist im wesentlichen auf diese Anschlussdose montiert und erhöht damit deren Gesamtbauhöhe.

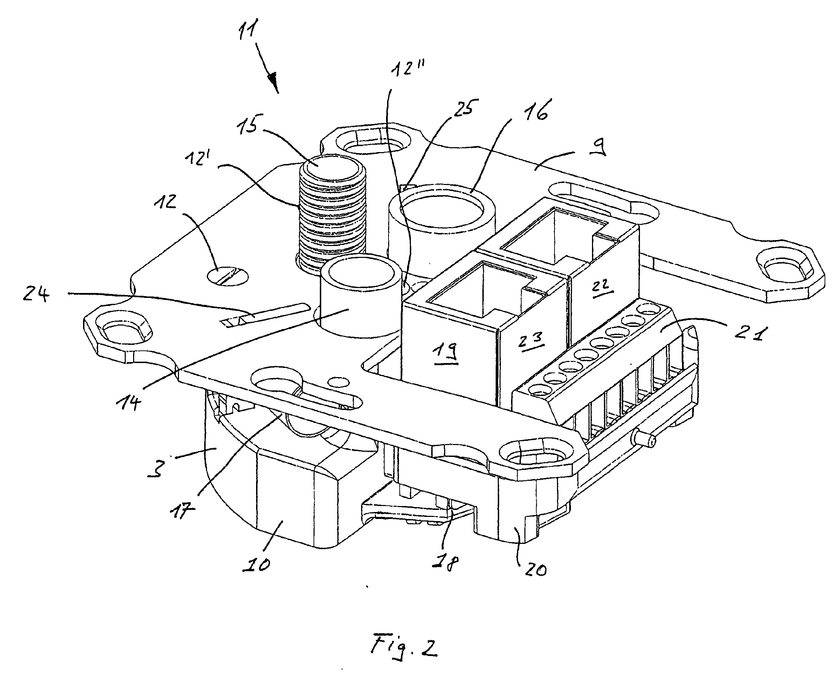

Figur 2 zeigt eine Ansicht einer möglichen Ausführungsform einer erfindungsgemässen Multimedia-Anschlussdose 11. Bei dieser ist an eine Befestigungsplatte 9 ein metallisches Gehäuse 10 mit Hilfe von drei Schrauben 12, 12', 12'' befestigt. Durch die Befestigungsplatte 9 ragen beim vorliegenden Ausführungsbeispiel drei Buchsen 14, 15, 16 für den Anschluss von geschirmten Koaxialkabeln. Ein tangential angeordnetes Schirmanschlusselement 17 erlaubt es, die Anschlussdose mit der Hausverteileranlage zu verbinden. Dieses Schirmanschlusselement 17 ist derart ausgebildet, dass es einerseits auf ein Koaxialkabel aufgecrimpt werden kann, und andererseits in das metallische Gehäuse 10 einsteckbar ist, so dass dieses mit dem metallischen Gehäuse 10 eine elektrisch und mechanisch stabile Verbindung herstellen kann. Es erweist sich als wesentlicher Vorteil der vorliegenden Anschlussdose 11, dass dieses Schirmanschlusselement 17 im wesentlichen tangential zur Umfangsrichtung des metallischen Gehäuses 10 an der Dose angeordnet ist, damit eine Führung des Koaxialkabels mit einem grösstmöglichen Biegeradius möglich ist, d.h. damit das Kabel keine Knickstellen aufweist, respektive keine Stellen, bei welchen das angeschlossene Kabel derart abgebogen werden muss, dass dieses den erlaubten Biegeradius unterschreitet. An dem metallischen Gehäuse 10 ist ein erstes Adapterteil 18 angebracht, an welches ein Kommunikationsmodul 19 mit Hilfe eines zweiten Adapterteils 20 befestigt werden kann. Dieses in Figur 2 dargestellte Kommunikationsmodul umfasst eine Anschlussleiste 21 und zwei für die Daten- und Kommunikationsübertragung geeignete RJ45-Anschluss respektive -Kontaktbuchsen 22, 23. Ein Vergleich dieser Ausführungsform mit dem in Figur 1 dargestellten Stand der Technik macht deutlich, dass die erfindungsgemässe Anschlussdose 11 eine wesentlich niedrigere Gesamtbauhöhe aufweist, wobei mit der Gesamtbauhöhe die in Figur 1 bezüglich der Betrachtungsebene in vertikaler Richtung verlaufende Höhe gemeint ist. Im Unterschied zur Anschlussdose 1 gemäss Figur 1, bei welcher die Kontaktbuchse 7 für die Daten- und Kommunikationsübertragung in vertikaler Richtung versetzt bzw. oberhalb der Buchsen 4, 5 für die Koaxialkabel angeordnet ist, sind in der erfindungsgemässen Anschlussdose 11 die Kontaktbuchsen 19, 22 sowie die Buchsen 14, 15, 16 im wesentlichen in der gleichen Ebene liegend, bzw. nebeneinander liegend angeordnet. Diese erfindungsgemässe Anordnung erlaubt es, eine Multimedia-Anschlussdose mit einer geringen Gesamtbauhöhe von beispielsweise weniger als 30 mm, beispielsweise 28.5 mm, zu schaffen. Eine derartige Ausgestaltung weist den besonderen Vorteil auf, dass die erfindungsgemässe Multimedia-Anschlussdose für den Einbau in einen normierten Unterputz-Einlasskasten mit 58 mm Durchmesser oder Seitenlänge einbaubar ist. Somit kann die erfindungsgemässe Multimedia-Anschlussdose in Kombination mit bestehenden, normierten Einlasskästen verwendet werden. In einer besonderen Weiterbildung der erfindungsgemässen Anschlussdose 11 ist diese mit Zugentlastungselementen 24, 25 ausgerüstet. Diese Zugentlastungselemente 24, 25 lassen sich quer zur Befestigungsplatte 9 bewegen und sind in diese einrastbar.

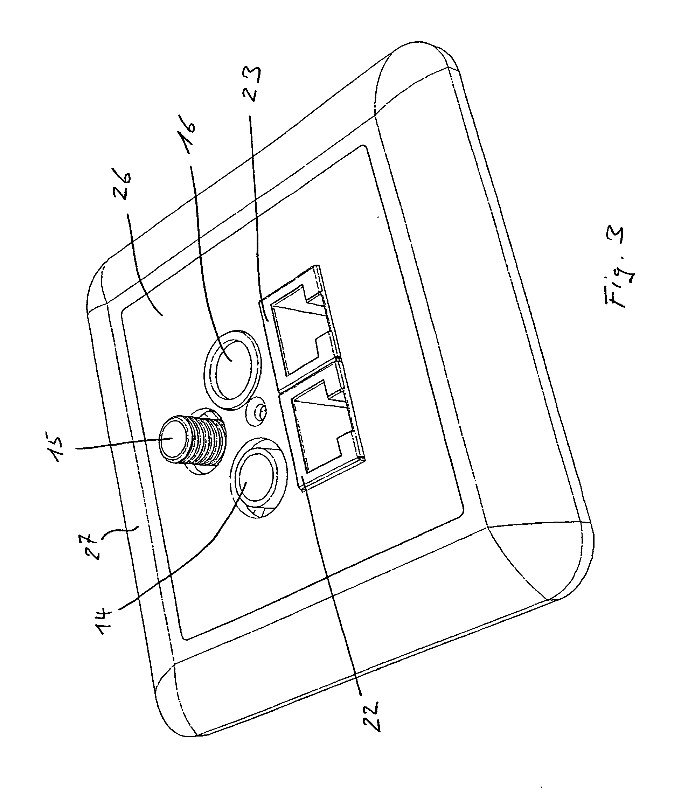

Figur 3 zeigt die erfindungsgemässe Multimedia-Anschlussdose 11 mit einer aufgesetzten Frontplatte 26 und einem dazu passenden Abdeckrahmen 27. Diese Ausführungsform eignet sich für die Unterputz-Montage. Es versteht sich, dass anstelle des Abdeckrahmens 27 auch eine für die Aufputz-Montage geeignete Kappe verwendet werden kann, oder dass anstelle einer im wesentlichen quadratisch geformten Frontplatte 26 auch eine kreisförmige Frontplatte, respektive zylindrische Kappe eingesetzt werden kann. Diese Figur 3 zeigt nochmals deutlich, dass die mit dem metallischen Gehäuse 10 verbundenen, beispielsweise aufgesteckten Buchsen 22 und 23 für die Daten- und Kommunikationsübertragung im wesentlichen in der gleichen Ebene liegen, wie die im metallischen Gehäuse 10 integrierten Koaxialbuchsen 14, 15, 16.

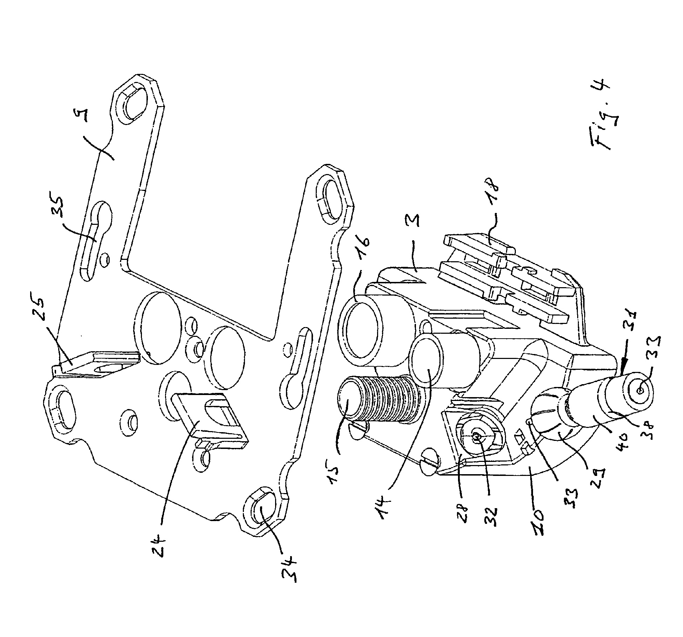

Figur 4 zeigt die erfindungsgemässe Multimedia-Anschlussdose 11 in einer Explosionsdarstellung. Deutlich erkennbar ist das erfindungsgemäss ausgestaltete metallische Gehäuse 10, in dessen Bodenteil die erforderliche elektronische und/oder elektrische Schaltung untergebracht sein kann und in dessen inneren Teil die gewünschten Koaxialbuchsen 14, 15, 16 integriert sind. Die elektronische bzw. elektrische Schaltung ist mit einem Schirmblech, welches den Boden des metallischen Gehäuses 10 bildet, abgeschirmt. Damit wird mit dem Gehäuse 10 ein geschlossener Raum gebildet, welcher die Schirmdämpfungswerte erheblich erhöht und der erfindungsgemässen Anschlussdose eine hohe Störfestigkeit verleiht. Dieses metallische Gehäuse 10 weist mindestens eine Anschlussstelle 28 auf, in welche ein Schirmanschlusselement 17 einsteckbar ist. Dabei ist der Rand der Anschlussstelle 28 derart ausgebildet, dass mit einer kugelgelenkförmig gestalteten Kontakthülse 29 eine gute mechanische und elektrische Verbindung hergestellt werden kann. Es versteht sich, dass eine allfällige zweite Anschlussstelle mit einem Abdeckplättchen oder einem Element mit einem Abschlusswiderstand abgeschlossen werden kann, falls diese nicht zur Weiterleitung zur nächsten Dose benötigt wird. Das Schirmanschlusselement 17 ist kabelseitig mit einer metallischen Hülse 30 versehen, welche mit dem Koaxialkabel 31 verbunden ist. Im Innern des Gehäuses 10 und unmittelbar hinter der Anschlussstelle 28 ist ein A-Kontakt 32 angeordnet, in welchen die Seele 33 des Koaxialkabels 31 eingesteckt werden kann. Damit ist die Kontaktstelle im Innern des metallischen Gehäuses 10 vollständig abgeschirmt. Das Gehäuse 10 weist eine Grundfläche auf, die maximal die Hälfte der Querschnitts- bzw. Bodenfläche einer Normeinbaudose beansprucht. Dies erlaubt es, an dem metallischen Gehäuse 10 ein erstes Adapterteil 18 anzubringen, an welches ein entsprechend geformtes zweites Adapterteil 20 für den Anschluss eines Daten- und Kommunikationsmoduls 19 mit mindestens einer Kontaktbuchse 22 ansteckbar ist. Dieses ansteckbare Daten-und Kommunikationsmodul 19 beansprucht erfindungsgemäss maximal die Hälfte der Querschnittsfläche der Anschlussdose 11. Die Befestigungsplatte 9 trägt in der gezeigten Ausführungsform zwei Zugentlastungselemente 24, 25, welche im eingerasteten Zustand die Schirmanschlusselemente 17 am Gehäuse 10 halten. Es versteht sich, dass die Befestigungsplatte 9 mit Öffnungen 34 und 35 versehen ist, um diese in bekannter Weise zu montieren.

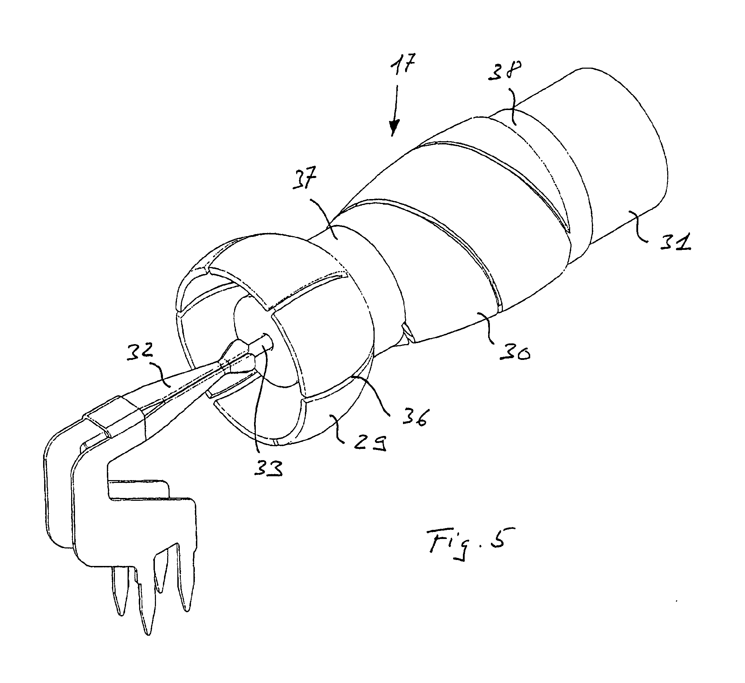

Figur 5 zeigt ein erfindungsgemäss ausgebildetes Schirmanschlusselement 17 mit einer Seele 33, welche an einem A-Kontakt 32 angeschlossen ist. Bei dieser Ausführungsform weist das Schirmanschlusselement kabelseitig eine elektrisch leitende, insbesondere metallische Crimphülse 30 auf, welche auf eine elektrisch leitende Abschirmung, insbesondere einen metallischen Geflechtschirm 38 eines Koaxialkabels 31 aufgecrimpt werden kann. Dosenseitig weist dieses Schirmanschlusselement 17 eine metallische Kontakthülse 29 auf, welche in die Anschlussstelle 28 des metallischen Gehäuses 10 einsteckbar ist. Die Form dieser Kontakthülse 29 ist komplementär zur Form der Anschlussstelle 28. Dies gewährleistet eine reib-und formschlüssige mechanische sowie eine geschirmte elektrische Verbindung. Der A-Kontakt 32 ist kabelseitig trichterförmig ausgebildet, um die Seele 33 des Koaxialkabels 31 reibschlüssig aufnehmen zu können. Vorteilhafterweise ist die Kontakthülse 29 mit Schlitzen 36 versehen, um eine federnde, kraft- und formschlüssige Verbindung zwischen Kontakthülse 29 und Anschlussstelle 28 herzustellen. Ebenso kann die Crimphülse 30 geschlitzt sein, um das Crimpen zu vereinfachen. Zwischen der Crimphülse 30 und der Kontakthülse 29 ist eine Halspartie 37 vorgesehen, über welche das Zugentlastungselement 24 oder 25 geschoben werden kann. Dadurch wird das Schirmanschlusselement 17 in seiner Position gehalten, respektive von allfälligen Zugkräften entlastet. Es versteht sich, dass das Schirmanschlusselement 17 nicht notwendigerweise mit besonderen Zugentlastungselementen 24 gehalten zu werden braucht, sondern mit bekannten Mitteln, insbesondere Kabelbindern am metallischen Gehäuse 10 gesichert werden kann.

Die Vorteile dieser erfindungsgemässen Multimedia-Anschlussdose liegen insbesondere in ihrem einfachen und flachen Aufbau, ihrer vielfältigen Möglichkeiten zur Anpassung an die individuellen Bedürfnisse der Benutzer sowie ihrer vorzüglichen Abschirmqualitäten. Es versteht sich, dass die besondere Gestaltung ohne erfinderisches Dazutun geändert werden kann.

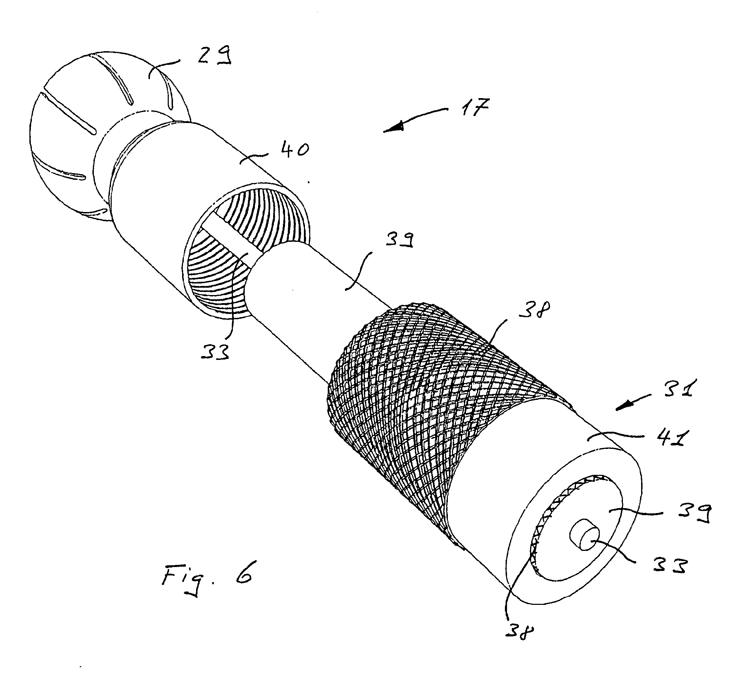

Figur 6 zeigt eine weitere Ausführungsform eines Schirmanschlusselementes 17, welches im Unterschied zu dem in Figur 5 dargestellten Schirmanschlusselement 17, eine Gewindehülse 40 aufweist, die mit der Kontakthülse 29 fest oder biegbar verbunden ist, wobei die Gewindehülse 40 auf dem Geflechtschirm 38 aufschraubbar ist, sodass eine elektrische Schirmwirkung zwischen dem Geflechtschirm 38 und der Kontakthülse 29 gewährleistet ist. Dazu muss der Geflechtschirm 38 vorgängig freigelegt werden und wird vorteilhafterweise über die Aussenisolation zurückgelegt.

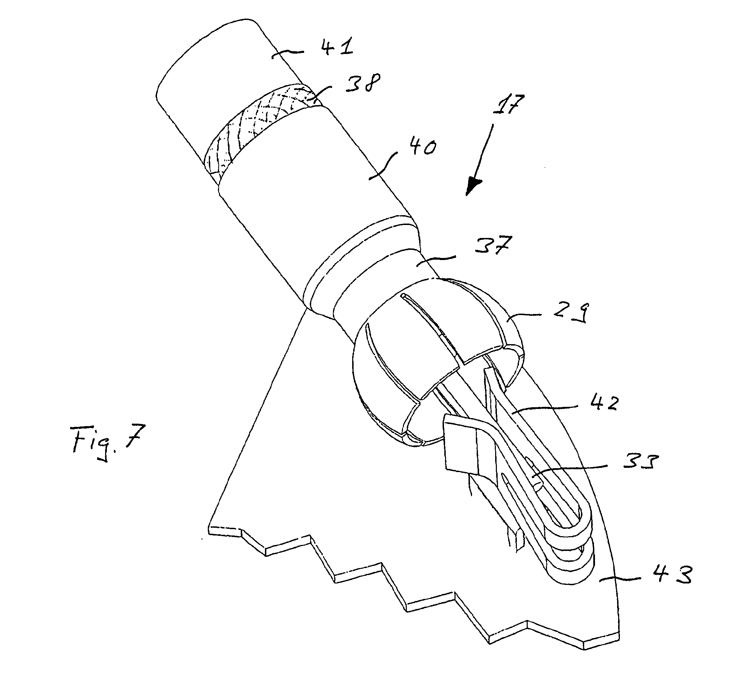

Figur 7 zeigt das in Figur 6 dargestellte Schirmanschlusselement 17 mit Kontakthülse 29, Halspartie 37, Gewindehülse 40, Geflechtschirm 38 und Kabelmantel 41. Die Seele 33 des Koaxialkabels 31 ist im Eingriff eines U-förmig ausgestalteten, vorgespannten, elektrisch leitenden Federkontaktes 42. Dieser Federkontakt 42 ist der Anschlussstelle 28 nachgeordnet innerhalb des metallischen Gehäuses 10 angeordnet. Einer der Schenkel des U-förmigen Federkontaktes 42 ist fest mit einer Grundplatte 43 (PCB oder PWB) verbunden. Die in der dargestellten Anordnung zur Kontakthülse 29 hin ausgerichtete, spaltförmige Öffnung des Federkontaktes 42 ist derart bezüglich der Anschlussstelle 28 angeordnet, dass die Seele 33 beim Einführen des Schirmanschlusselementes 17 in die Anschlussstelle 28 in diese spaltförmige Öffnung gleitet, so dass eine reib- und kraftschlüssige, nieder-ohmige Verbindung zwischen der Seele 33 und dem Federkontakt 42 entsteht. Der Federkontakt 42 besteht vorzugsweise aus Metall. In der Regel besteht die Seele 33 aus einem weichem und der Federkontakt 42 aus einem relativen harten Material. Die hohe Federkraft des Federkontaktes 42 ermöglicht eine elektrische Verbindung zur Seele 33 mit einem sehr geringen Übergangswiderstand.

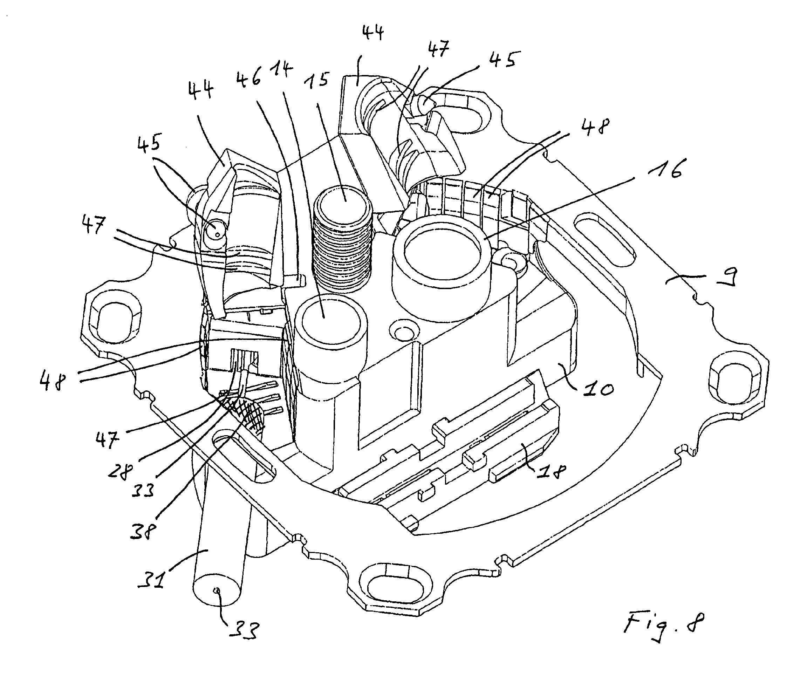

Figur 8 zeigt ein weiteres Ausführungsbeispiel einer Anschlussdose 11, welche ein metallisches Gehäuse 10 mit Koaxialbuchsen 14, 15, 16, Adapterteil 18 sowie eine Befestigungsplatte 9 umfasst. Im Unterschied zu der in Figur 4 dargestellten Ausführungsform kann bei der in Figur 8 dargestellten Anschlussdose 11 auf die Kontakthülse 29 sowie auf die entsprechend angepasst ausgestaltete Anschlussstelle 28 verzichtet werden, indem das abisolierte Koaxialkabel 31 direkt in die Anschlussstelle 28 eingeführt wird. Dazu ist an der Stirnseite des Koaxialkabels 31 die Seele 33 freigelegt und der Geflechtschirm 38 an der Oberfläche des Aussenmantels 41 aufliegend zurückgelegt. Hinter der Anschlussstelle 28 ist der in Figur 7 dargestellte Federkontakt 42 angeordnet, in welchen die Seele 33 eingeführt wird. Die Anschlussdose 11 umfasst ein in einer Lagerstelle 46 schwenkbar gelagertes Befestigungsmittel 44, insbesondere eine Klemmschelle, mit Schraube 45 und Rippen 47. Das Koaxialkabel 31 wird nun derart in der Anschlussdose 11 befestigt, dass die Seele 33 genügend tief in den Federkontakt 42 eingeführt ist und der Geflechtschirm 38 in den Bereich der Rippen 47 zu liegen kommt. Daraufhin wird das Befestigungsmittel 44 nach unten geschwenkt und mit Hilfe der Schraube 45 fest mit dem metallischen Gehäuse 10 verbunden, sodass das Koaxialkabel 31 durch die Rippen 47 leicht gequetscht wird und dadurch eine mechanische Zugentlastung gebildet wird. In einer vorteilhaften Ausgestaltung kann der Raum vor der Anschlussstelle 28 mit einer elektrisch leitenden Abschirmung 48 versehen sein, um die Übergangsstelle des Koaxialkabels 31 besser gegen Störsignale abzuschirmen. Die Abschirmung 48 ist vorteilhafterweise aus einem dünnen Metallblech gebildet, kann jedoch auch aus einem sonstigen elektrischen Leiter, beispielsweise aus einem elektrisch leitenden Elastomer bestehen. Die Schraube 45 kann jederzeit wieder gelöst und das Befestigungsmittel 44 aufgeklappt werden, so dass das Koaxialkabel 31 ersetzt werden kann. Ein Vorteil der in Figur 8 dargestellten Anschlussdose 11 ist darin zu sehen, dass zum Anschliessen des Koaxialkabels 31 keinerlei zusätzliche Hilfsmittel erforderlich sind. Es genügt, die Seele 33 freizulegen und den Geflechtschirm 38 derart freizulegen, dass eine leitende Verbindung zum Gehäuse 10 gebildet werden kann. Die Anschlussstelle 28 ist derart im Gehäuse 10 angeordnet, dass das Koaxialkabel 31 im wesentlichen etwa tangential zur Umfangsrichtung des Gehäuses 10 verlaufend diesem zuführbar ist.

Ein weiterer Vorteil der in Figur 8 dargestellten Anschlussdose 11 ist darin zu sehen, dass damit Koaxialkabel 11 mit unterschiedlichen Durchmessern auch ohne zusätzliche Hilfsmittel verbunden werden können. Die in Figur 8 dargestellte Anschlussdose 11 verfügt über zwei getrennte Anschlüsse für je ein separates Koaxialkabel 31.

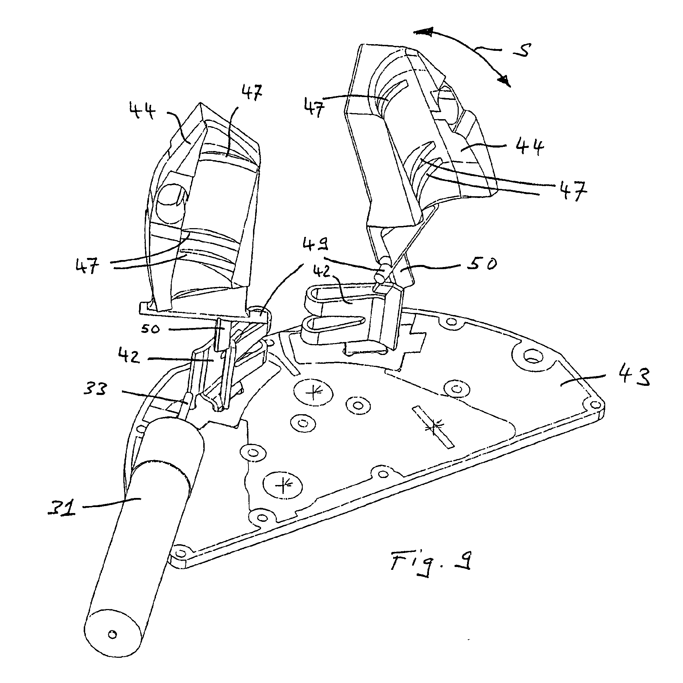

Figur 9 zeigt die beiden fest mit der Grundplatte 43 des Gehäuses 10 verbundenen Federkontakte 42. Die beiden Befestigungsmittel 44 sind über Lagerstifte 49 in Schwenkrichtung S schwenkbar im metallischen Gehäuse 10 gelagert. Jedes Befestigungsmittel 44 weist einen Öffnungsstift 50 auf, welcher derart bezüglich dem Federkontakt 42 angeordnet und angepasst ausgestaltet ist, dass dieser Öffnungsstift 50 beim Hochklappen des Befestigungsmittels 44 in den Zwischenraum des U-förmigen Federkontaktes 42 eingreift und dadurch den Federkontakt öffnet, so dass die Seele 33 ohne oder mit nur sehr geringer Kraft in den Federkontakt 42 eingeführt oder aus diesem herausgezogen werden kann. Der in Figur 9 dargestellte Öffnungsstift 50 weist somit den Vorteil auf, dass die Seele 33 selbst dann, wenn der Federkontakt 42 eine sehr hohe Federkraft aufweist, unter geringem Kraftaufwand in das metallische Gehäuse einführbar ist. Der Öffnungsstift 50 kann auch elektrisch isoliert sein und beispielsweise aus einem Isolator bestehen, oder eine isolierende Oberflächenbeschichtung aufweisen.

Es kann sich zudem als vorteilhaft erweisen, den Federkontakt 42 mit einem elektrischen Isolationsmittel, beispielsweise einem Kunststoff, derart zu umgeben, dass nur der Spalt, oder eventuell noch der Bereich für den Eingriff des Öffnungsstiftes 50, von aussen zugänglich ist.

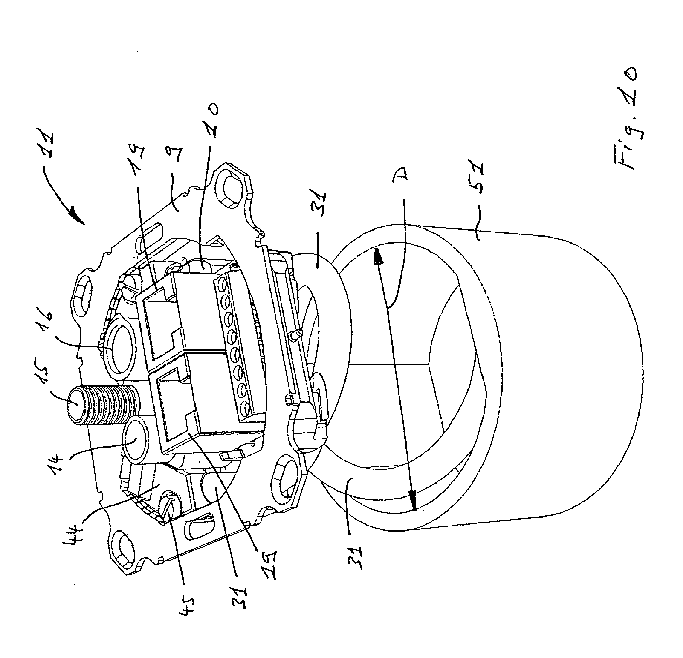

Figur 10 zeigt die Anschlussdose 11 gemäss Figur 8 zusammen mit einem Unterputz-Einlasskasten 51 mit Innendurchmesser D. Das Koaxialkabel 31 ist im wesentlichen wendelförmig verlaufend im Unterputz-Einlasskasten 51 angeordnet und mündet in einer im wesentlichen tangential verlaufenden Richtung in das metallische Gehäuse 10 der Anschlussdose 11. Diese Anordnung weist den Vorteil auf, dass die Anschlussdose 11 mit einem relativ langen, im Unterputz-Einlasskasten 51 anzuordnenden Koaxialkabelabschnitt montierbar ist, so dass die Anschlussdose 11 sehr bequem, sicher und in kurzer Zeit montierbar ist. Der Innendurchmesser D beträgt vorzugsweise etwa 58 mm.

## Patentansprüche

1. Multimedia-Anschlussdose (11) mit einem Dosenbodenteil (3) mit mindestens einer Anschlussstelle (28) für die Aufnahme eines Koaxialkabels (31) und mit mindestens einer Koaxial-Anschlussbuchse (14, 15, 16), **dadurch gekennzeichnet, dass** die Anschlussdose (11) ein geschlossenes, metallisches Gehäuse (10) umfasst, in welchem mindestens eine Koaxial-Anschlussbuchse (14, 15, 16) integriert ist, wobei das metallische Gehäuse (10) eine Grundfläche aufweist, die maximal die Hälfte der Querschnittsfläche der Anschlussdose (11) beansprucht und wobei das metallische Gehäuse (10) ein erstes Adapterteil (18) zum Anschliessen mindestens eines Kommunikationsmoduls (19) aufweist.

2. Multimedia-Anschlussdose nach Anspruch 1, **dadurch gekennzeichnet, dass** das metallische Gehäuse (10) die Anschlussstelle (28) für die Herstellung einer mechanischen und/oder elektrischen Schnittstelle umfasst.

3. Multimedia-Anschlussdose nach Anspruch 2, **dadurch gekennzeichnet, dass** die Anschlussstelle (28) derart im metallischen Gehäuse (10) angeordnet ist, dass ein Koaxialkabel (31) in einer im wesentlichen tangential zur Umfangsrichtung des metallischen Gehäuses (10) verlaufenden Richtung mit dieser Anschlussstelle (28) verbindbar ist.

4. Multimedia-Anschlussdose nach einem der vorhergehenden Ansprüche, **dadurch gekennzeichnet, dass** die Anschlussdose (11) mindestens ein Daten-Kommunikationsmodul (19) umfasst, dessen Grundfläche maximal die Hälfte der Querschnittsfläche der Anschlussdose (11) beansprucht.

5. Multimedia-Anschlussdose nach einem der vorhergehenden Ansprüche, **dadurch gekennzeichnet, dass** diese eine Befestigungsplatte (9) aufweist, welche mit mindestens einem Zugentlastungselement (24, 25) versehen ist.

6. Multimedia-Anschlussdose nach einem der vorhergehenden Ansprüche, **dadurch gekennzeichnet, dass** im metallischen Gehäuse (10) ein Federkontakt (42) angeordnet ist.

7. Multimedia-Anschlussdose nach Anspruch 6, **dadurch gekennzeichnet, dass** vor der Anschlussstelle (28) ein im Gehäuse (10) schwenkbar gelagertes Befestigungsmittel (44) angeordnet ist.

8. Multimedia-Anschlussdose nach Anspruch 7, **dadurch gekennzeichnet, dass** das Befestigungsmittel (44) einen Öffnungsstift (50) umfasst, welcher derart bezüglich dem Federkontakt (42) angeordnet ist, dass der Öffnungsstift (50) beim Aufschwenken des Befestigungsmittels (44) den Federkontakt (42) öffnet.

9. Schirmanschlusselement (17) zur Verwendung mit einer Multimedia-Anschlussdose (11) gemäss Anspruch 1, **dadurch gekennzeichnet, dass** dieses derart ausgebildet ist, dass dieses mit der Anschlussstelle (28) der Anschlussdose (11) mechanisch und elektrisch zusammenwirkt.

10. Schirmanschlusselement nach Anspruch 9, **dadurch gekennzeichnet, dass** dieses dosenseitig eine elektrisch leitende Kontakthülse (29) aufweist, mit welcher der mechanische und elektrische Kontakt mit der Anschlussstelle (28) herstellbar ist.

11. Schirmanschlusselement nach einem der Ansprüche 9 oder 10, **dadurch gekennzeichnet, dass** dieses kabelseitig eine elektrisch leitende Crimphülse (30) aufweist, welche auf eine Abschirmung, insbesondere einen Geflechtschirm (38) eines Koaxialkabels (31) crimpbar ist.

12. Schirmanschlusselement nach einem der Ansprüche 9 oder 10, **dadurch gekennzeichnet, dass** dieses kabelseitig eine Hülse (40), insbesondere eine Gewindehülse aufweist, welche eine elektrische Verbindung zur Abschirmung des Koaxialkabels (31) aufweist, und welche mit der metallischen Kontakthülse (29) verbunden ist.

13. Daten- und Kommunikationsmodul (19) zur Verwendung mit einer Multimedia-Anschlussdose (11) gemäss Anspruch 1, **dadurch gekennzeichnet, dass** dieses mit einem zweiten Adapterteil (20) versehen ist, welches mit dem ersten Adapterteil (18) des metallischen Gehäuses (10) zusammenwirkt.

14. Verwendung eines Daten- und Kommunikationsmoduls (19) gemäss Anspruch 13 in einer Multimedia-Anschlussdose (11) gemäss Anspruch 1.

## Claims

1. A multimedia connection box (11) with a box base part (3) with at least one connection point (28) for receiving a coaxial cable (31) and with at least one coaxial connection socket (14, 15, 16), **characterised in that** the connection box (11) comprises a closed, metal housing (10) in which at least one coaxial connection socket (14, 15, 16) is integrated, the metal housing (10) having a base surface which takes up at most half of the cross-sectional surface area of the connection box (11), and the metal housing (10) having a first adapter part (18) for connecting at least one communication module (19).

2. A multimedia connection box according to Claim 1, **characterised in that** the metal housing (10) comprises the connection point (28) for the production of a mechanical and/or electrical interface.

3. A multimedia connection box according to Claim 2, **characterised in that** the connection point (28) is arranged in the metal housing (10) such that a coaxial cable (31) can be connected to this connection point (28) in a direction extending substantially tangentially to the peripheral direction of the metal housing (10).

4. A multimedia connection box according to one of the preceding claims, **characterised in that** the connection box (11) comprises at least one data communication module (19), the base surface of which takes up at most half of the cross-sectional surface area of the connection box (11).

5. A multimedia connection box according to one of the preceding claims, **characterised in that** said box has a mounting plate (9) which is provided with at least one pull-relief element (24, 25).

6. A multimedia connection box according to one of the preceding claims, **characterised in that** a spring contact (42) is arranged in the metal housing (10).

7. A multimedia connection box according to Claim 6, **characterised in that** a fastening means (44) pivotably mounted in the housing (10) is arranged before the connection point (28).

8. A multimedia connection box according to Claim 7, **characterised in that** the fastening means (44) has an opening pin (50) which is arranged with respect to the spring contact (42) such that the opening pin (50) opens the spring contact (42) upon pivoting-up of the fastening means (44).

9. A shield connection element (17) for use with a multimedia connection box (11) according to Claim 1, **characterised in that** it is designed such that it cooperates mechanically and electrically with the connection point (28) of the connection box (11).

10. A shield connection element according to Claim 9, **characterised in that** it has on the box side an electrically conductive contact bush (29), with which the mechanical and electrical contact with the connection point (28) can be brought about.

11. A shield connection element according to one of Claims 9 or 10, **characterised in that** it has on the cable side an electrically conductive crimping sleeve (30) which can be crimped onto a shield means, in particular a braided shield (38) of a coaxial cable (31).

12. A shield connection element according to one of Claims 9 or 10, **characterised in that** it has on the cable side a sleeve (40), in particular a threaded sleeve, which has an electrical connection to the shield means of the coaxial cable (31), and which is connected to the metal contact bush (29).

13. A data and communication module (19) for use with a multimedia connection box (11) according to Claim 1, **characterised in that** it is provided with a second adapter part (20) which cooperates with the first adapter part (18) of the metal housing (10).

14. Use of a data and communication module (19) according to Claim 13 in a multimedia connection box (11) according to Claim 1.

## Revendications

1. Boîte de raccordement multimédia (11) comprenant une partie de fond de boîte (3) avec au moins un point de raccordement (28) pour la réception d'un câble coaxial (31) et avec au moins une douille de raccordement coaxiale (14, 15, 16), **caractérisée par le fait que** la boîte de raccordement (11) comprend un boîtier métallique fermé (10) dans lequel au moins une douille de raccordement coaxiale (14, 15, 16) est intégrée, le boîtier métallique (10) ayant une surface qui représente au maximum la moitié de l'aire de la section de la boîte de raccordement (11) et le boîtier métallique (10) étant pourvu d'un premier élément adaptateur (18) pour le raccordement d'au moins un module de communication (19).

2. Boîte de raccordement multimédia selon la revendication 1, **caractérisée par le fait que** le boîtier métallique (10) comprend le point de raccordement (28) pour l'établissement d'une interface métallique et/ou électrique.

3. Boîte de raccordement multimédia selon la revendication 2, **caractérisée par le fait que** le point de raccordement (28) est situé dans le boîtier métallique (10) de manière à ce qu'un câble coaxial (31) puisse être connecté à ce point de raccordement (28) dans une direction essentiellement tangentielle par rapport à la direction circonférentielle du boîtier métallique (10).

4. Boîte de raccordement multimédia selon l'une des revendications précédentes, **caractérisée par le fait que** la boîte de raccordement (11) comprend au moins un module de communication de données (19) dont la surface représente au maximum la moitié de l'aire de la section de la boîte de raccordement (11).

5. Boîte de raccordement multimédia selon l'une des revendications précédentes, **caractérisée par le fait que** cette boîte comprend une plaque de fixation (9) qui est pourvue d'au moins un élément de décharge de traction (24, 25).

6. Boîte de raccordement multimédia selon l'une des revendications précédentes, **caractérisée par le fait qu'**un contact élastique (42) est situé dans le boîtier métallique (10).

7. Boîte de raccordement multimédia selon la revendication 6, **caractérisée par le fait qu'**un moyen de fixation (44) monté de manière pivotante dans le boîtier (10) est situé devant le point de raccordement (28).

8. Boîte de raccordement multimédia selon la revendication 7, **caractérisée par le fait que** le moyen de fixation (44) comprend une broche d'ouverture (50) qui est disposée de telle façon par rapport au contact élastique (42) que la broche d'ouverture (50) ouvre le contact élastique (42) lorsque le moyen de fixation (44) pivote.

9. Elément de raccordement de blindage (17) destiné à être utilisé avec une boîte de raccordement multimédia (11) selon la revendication 1, **caractérisé par le fait qu'**il est exécuté de manière à coopérer mécaniquement et électriquement avec le point de raccordement (28) de la boîte de raccordement (11).

10. Elément de raccordement de blindage selon la revendication 9, **caractérisé par le fait qu'**il est pourvu, sur le côté de la boîte, d'une douille de contact électroconductrice (29) grâce à laquelle le contact mécanique et électrique avec le point de raccordement (28) peut être établi.

11. Elément de raccordement de blindage selon l'une des revendications 9 ou 10, **caractérisé par le fait qu'**il est pourvu, sur le côté du câble, d'une douille de sertissage électroconductrice (30) qui peut être sertie sur un blindage, notamment un blindage tressé (38) d'un câble coaxial (31).

12. Elément de raccordement de blindage selon l'une des revendications 9 ou 10, **caractérisé par le fait qu'**il est pourvu, sur le côté du CABLE, d'une douille (40), notamment d'une douille filetée, qui est pourvue d'une liaison électrique avec le blindage du câble coaxial (31) et qui est reliée à la douille de contact métallique (29).

13. Module de données et de communication (19) destiné à être utilisé avec une boîte de raccordement multimédia (11) selon la revendication 1, **caractérisé par le fait qu'**il est pourvu d'un second élément adaptateur (20) qui coopère avec le premier élément adaptateur (18) du boîtier métallique (10).

14. Utilisation d'un module de données et de communication (19) selon la revendication 13 dans une boîte de raccordement multimédia (11) selon la revendication 1.
